(19) 

Europäisches
Patentamt
European
Patent Office
Office européen
des brevets

(11)     EP 2 982 171 B1

(12)                    **EUROPEAN PATENT SPECIFICATION**

(45) Date of publication and mention
of the grant of the patent:
**26.02.2020 Bulletin 2020/09**

(51) Int Cl.:
*H04W 36/04* *(2009.01)*       *H04W 36/00* *(2009.01)*
*H04W 36/24* *(2009.01)*

(21) Application number: **14779295.6**

(22) Date of filing: **04.04.2014**

(86) International application number:
**PCT/FI2014/050237**

(87) International publication number:
**WO 2014/162061 (09.10.2014 Gazette 2014/41)**

(54) **BACKGROUND SEARCH OF SMALL CELLS**

HINTERGRUNDSUCHE VON KLEINEN ZELLEN

RECHERCHE EN ARRIÈRE-PLAN DE PETITES CELLULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2013 US 201361808721 P**

(43) Date of publication of application:
**10.02.2016 Bulletin 2016/06**

(73) Proprietor: **Nokia Technologies Oy
02610 Espoo (FI)**

(72) Inventors:
• **DALSGAARD, Lars**
**FI-90230 Oulu (FI)**
• **KOSKELA, Jarkko Tuomo**
**FI-90230 Oulu (FI)**

(74) Representative: **Derry, Paul Stefan
Venner Shipley LLP
200 Aldersgate
London EC1A 4HD (GB)**

(56) References cited:
WO-A1-2011/041662     WO-A1-2013/020522
WO-A1-2013/025160     US-A1- 2013 017 820

• NOKIA SIEMENS NETWORKS ET AL:
"Background search for small cell detection",
3GPP DRAFT; R2-123102
BACKGROUND_SMALL_CELL_SEARCH, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG2, no. Prague,
Czech Republic; 20120521 - 20120525, 24 May
2012 (2012-05-24), XP050607523, [retrieved on
2012-05-24]
• NOKIA SIEMENS NETWORKS ET AL: "Efficient
small cell detection background search", 3GPP
DRAFT; R2-121623
SMALL_CELL_DETECTION_BACKGROUND_SE
ARCH, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG2, no. Jeju, South Korea; 20120326 - 20120330,
20 March 2012 (2012-03-20), XP050606380,
[retrieved on 2012-03-20]
• NOKIA SIEMENS NETWORKS ET AL:
"Background inter-frequency measurement for
small cell discovery", 3GPP DRAFT; R2-130451
BACKGROUND SMALL CELL DETECTION, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG2, no. Malta;
20130128 - 20130201 19 January 2013
(2013-01-19), XP050668366, Retrieved from the
Internet:
URL:http://www.3gpp.org/ftp/tsg_ran/WG2_RL
2/TSGR2_81/Docs/ [retrieved on 2013-01-19]

- NOKIA SIEMENS NETWORKS ET AL: "Enhancements for Small Cell Detection", 3GPP DRAFT; R2-120523_SMALL CELL DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565426, [retrieved on 2012-01-31]

- NOKIA SIEMENS NETWORKS ET AL.: 'Background search for small cell detection.' R2-123102; 3GPP TSG-RAN WG2 MEETING #78 21 May 2012, PRAGUE, CZECH REPUBLIC, XP050607523

**Description**

BACKGROUND:

**Field:**

Various communication systems may benefit from methods and apparatuses for background search of small cells. For example, heterogeneous networks may benefit from such background searches and may be able to use such searches to realize specified levels of performance.

**Description of the Related Art:**

Mobility in heterogeneous network (HetNet) deployments, small cell deployments, measurement configuration, user equipment (UE) measurement performance, event evaluation, measurement reporting and handover mobility in connected mode are all concerns when providing wireless communications to users. Of particular interest may be inter-frequency measurement performance for small cell detection, for example, in connection with HetNet or small cell enhancements.

Inter-frequency searches for small cells as described in third generation partnership project (3GPP) technical report (TR) 36.839, "Mobility Enhancements in Heterogeneous Networks," herein incorporated by reference. Evolved universal terrestrial radio access network (E-UTRAN) favored and optimized intra-frequency mobility during the initial system design. Inter-frequency was supported for cases where the serving carrier coverage was inadequate, for example, due to coverage holes, or normal coverage limitations, or network needed to other carrier for load balancing and offloading purposes. As such, the inter-frequency measurements design and performance requirements were designed such that when the UE was first configured to perform inter-frequency measurements, cell detection and possible reporting would happen rather fast in those cases where coverage was available. Thus, fast reaction was enabled for handovers. Inter-frequency measurements was basically designed such that it would be configured on a need basis and enable fast detection of cells on configured carrier(s) if such were available.

3GPP Draft Report R2-123102 "Background search for small cell detection", 3GPP Report Drat R121623 "Efficient small cell detection background search" and 3GPP Draft Report R2-130451 "Background inter-frequency measurement for small cell discovery" all disclose the use of a new gap pattern to perform background inter-frequency measurements for the detection of small cells. 3GPP Draft Report R2-120523 "Enhancements for small cell detection" discloses varying the inter-frequency measurement rate based on the mobility state of the UE.

WO 2013/025160 A1 discloses a method comprising performing measurements on the received signals according to a first measurement configuration, detecting that a change from the first measurement configuration to a second measurement configuration has occurred, performing measurements on the received signals according to the second measurement configuration, and using the measurements performed according to the first measurement configuration and the measurements performed according to the second measurement configuration for radio resource management tasks.

SUMMARY:

The invention is defined by the appended claims.

BRIEF DESCRIPTION OF THE DRAWINGS:

For proper understanding of the invention, reference should be made to the accompanying drawings, wherein:

Figure 1 illustrates progress of a heterogeneous network having separate carrier frequencies for macro and small cells according to certain embodiments.
Figure 2 illustrates a chart of expected increase in wireless voice and data volume over time according to certain embodiments.
Figure 3 illustrates a block diagram of a system according to certain embodiments.
Figure 4 illustrates a method according to certain embodiments.
Figure 5 illustrates a UE performance graph according to certain embodiments.
Figure 6 illustrates a signaling flow diagram according to certain embodiments.

DETAILED DESCRIPTION:

Certain embodiments provide techniques and apparatuses for background search of small cells. Moreover, such embodiments may help to permit communication networks to achieve desired levels or types of performance.

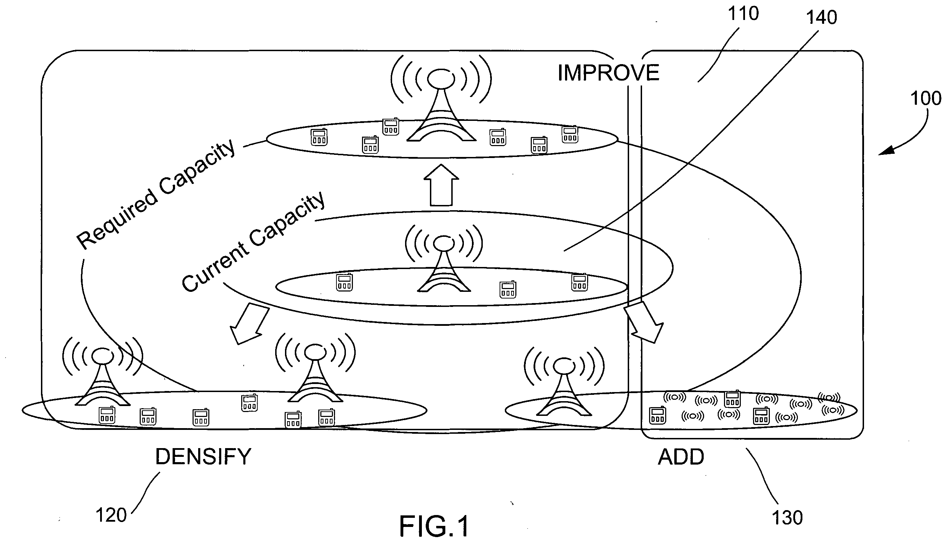

Figure 1 illustrates progress of a heterogeneous network 100 having separate carrier frequencies for macro and small cells according to certain embodiments. As shown in Figure 1, a macro cell having a current capacity 140 may be provided with improved capabilities, for example to function as an improved macro cell 110. Alternatively, capacity may be enhanced by providing a densified cell 120 in which there are multiple access points. This cell is "densified" in the sense of having a greater number of access points per unit area than previously. In another alternative, capacity may be added to the network of macro cell 130 by permitting small cells to operate on separate frequencies from the macro cell 130.

For instance, Evolved Universal Terrestrial Radio Access Network (E-UTRAN) systems may, in certain embodiments, be provided with greater capacity. One way to achieve that capacity may be by deploying small cells, such as those associated with 130 in Figure 1. These may be deployed, for example, on a separate carrier frequency for the purpose of offloading and load balancing in order to enable the networks and operators to cope with an expected, for example, a thousand-fold increase in data volume transmitted over the air.

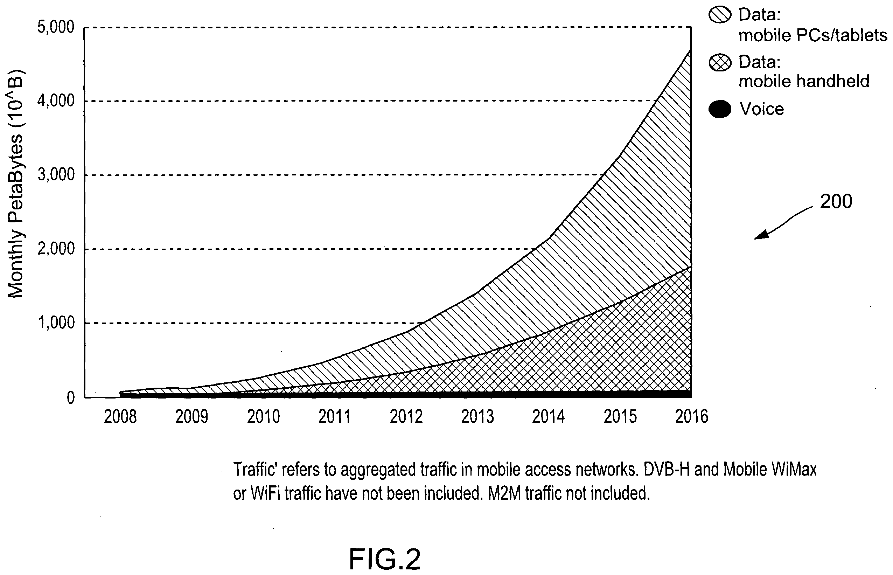

Figure 2 illustrates a chart 200 of the expected increase in wireless voice and data volume over time according to certain embodiments. As mentioned above, this expected increase may reach a thousand-fold over time, particularly due to data traffic. This potential increase means that there may be value for a systems, networks, and operators to configure user equipment (UE) to perform inter-frequency measurements on a more continuous manner. However, the conventional inter-frequency measurement design is not configured for such continuous inter-frequency measurement. In certain embodiments, only one gap pattern is configured per UE to avoid excessive complexity. Additionally, the UE may need to be informed whether this gap pattern configuration is applied or not for a given carrier frequency.

Certain embodiments define measurement performance requirements for user equipment (UE). Currently in 3GPP TR 36.133, Chapter 8.1.2.1, performance requirements may be defined in the following way: Inter-frequency and inter-RAT measurement requirements may rely on the UE being configured with one measurement gap pattern unless the UE has signaled that it is capable of conducting such measurements without gaps; and UEs may be configured to support those measurement gap patterns listed below in Table 8.1.2.1-1 that may be relevant to the UE measurement capabilities.

**Table 8.1.2.1-1: Gap Pattern Configurations supported by the UE**

| Gap Pattern Id | MeasurementGap Length (MGL, ms) | Measurement Gap Repetition Period (MGRP, ms) | Minimum available time for inter-frequency and inter-RAT measurements during 480ms period ($T_{inter1}$, ms) | Measurement Purpose |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA2000 1x |

Conventionally, when inter-frequency reference signal time difference (RSTD) measurements are configured as a part of the measurement configuration only Gap Pattern 0 can be used. For defining the inter-frequency and inter-RAT requirements, $T_{inter1}=30$ milliseconds is conventionally assumed.

Chapter 8.1.2.1 further states that "A UE that is capable of identifying and measuring inter-frequency and/or inter-radio access techniques (inter-RAT) cells without gaps shall follow requirements as if Gap Pattern Id #0 had been used and the minimum available time TInter1 of 60 milliseconds shall be assumed for the corresponding requirements."

Conventionally in 3GPP 36.133, Chapter 8.1.2.3.1.1 specifies UTRAN Frequency-Division Duplexing (FDD) inter-frequency measurements when no discontinuous reception (DRX) is used.

When measurement gaps are scheduled, or the UE supports capability of conducting such measurements without gaps, the UE may be able to identify a new FDD inter-frequency within $T_{Identify\_Inter}$ according to the following expression:

$$T_{Identify\_Inter} = T_{Basic\_Identify\_Inter} \cdot \frac{480}{T_{Inter1}} \cdot N_{freq} \quad ms\,.$$

Where: $T_{Basic\_Identify\_Inter}$ = 480 milliseconds. It is the time period used in the inter-frequency equation where the maximum allowed time for the UE to identify a new FDD inter-frequency cell is defined. $N_{ferq}$ is defined in clause 8.1.2.1.1 and $T_{inter1}$ is defined in clause 8.1.2.1.

A cell may be considered detectable provided the following conditions are fulfilled: Radio Signal Received Power (RSRP) and RSRP Ês/Iot according to Annex B.2.3 for a corresponding Band; other RSRP related side conditions given in Sections 9.1.3.1 and 9.1.3.2 and Radio Signal Received Quality (RSRQ) related side conditions given in Sections 9.1.6.1 and 9.1.6.2 are fulfilled; and SCH_RP|$_{dBm}$ and SCH Ês/Iot according to Annex B.2.3 for a corresponding Band.

When measurement gaps are scheduled for FDD inter-frequency measurements, or the UE supports capability of conducting such measurements without gaps, the UE physical layer may be capable of reporting RSRP and RSRQ measurements to higher layers with measurement accuracy as specified in sub-clauses 9.1.3.1, 9.1.3.2, 9.1.6.1, and 9.1.6.2, respectively, with measurement period given by table 8.1.2.3.1.1-1.

**Table 8.1.2.3.1.1-1: Measurement period and measurement bandwidth**

| Configuration | Physical Layer Measurement period: $T_{Measurement\_Period\_Inter\_FDD}$ [ms] | Measurement bandwidth [RB] |
|---|---|---|
| 0 | 480 X $N_{freq}$ | 6 |
| 1 (Note) | 240 X $N_{freq}$ | 50 |
| Note: This configuration is optional | | |

The UE may be capable of performing RSRP and RSRQ measurements of at least four (4) inter-frequency cells per FDD inter-frequency for up to three (3) FDD inter-frequencies and the UE physical layer may be capable of reporting RSRP and RSRQ measurements to higher layers with the measurement period defined in Table 8.1.2.3.1.1-1.

In certain embodiments there are few different operative principles identified in making performance requirements for background search performance requirements. For example, UE "steals" one measurement occasion for every T_background, such as, 4800 milliseconds for reduced search frequency on a given carrier. The measurements for background search may be taken from normal (existing) gap configurations when such is configured for the UE.

In this example embodiment there may be no need to impact normal requirements. Reduced requirements may be introduced and write that no impact may be allowed for regular measurements. As the specification does not dictate and the network currently does not "know" how the UE distributes the occasions of measurements between a configured carriers, there is no need for the network to know which gap UE "steals" - as long as the amount of gaps stolen is at a predetermined low threshold so that UE still fulfills requirements for regular measurements.

In another example embodiment, an autonomous gap configuration every T background, such as, 4800 milliseconds for reduced performance carrier can be utilized. In other words, UE will switch to the carrier and perform measurements outside any configured measurement gaps, that is, no gap pattern activated for background search measurements. As the periodicity of measurements is so rare it should not have a strong negative impact to the network or user in terms of loss in throughput (TP) even if the network cannot reach UE for 6 milliseconds every T_background. Therefore, in this example embodiment a reduced requirement is introduced and there is no need to impact normal requirements.

In yet another example embodiment, a technique of introducing a new gap configuration every T_background, such as, every 4800 milliseconds may be used. To reflect impact to measurement performance one could capture this to reflect reduced measurement time in TInter in table 8.1.2.1-1, for example, with 4800 milliseconds gap period TInter would be 0,5 milliseconds. But as generally UE is using same gap configuration for all the measurements any new measurement gaps would affect all frequencies to be measured.

In another example embodiment, UE "steals" one measurement occasion every T background, such as, 4800 millisecond a gap for reduced search frequency on a given carrier. The gap configuration may be taken from normal (existing) gap configurations when such is configured for the UE but existing performance requirements may be impacted so normal carriers (carrier configured for normal non-reduced cell detection) will have slightly reduced performance (only little and probably not detectable in real life/testing) and new requirements for reduced performance for the carrier will be defined.

In certain embodiments, another aspect with identification of small cells may be that UE performance requirements could be also upper limited, that is, UE may not be allowed to perform better than performance requirements indicates if/as this (may) impacts other performance requirements, for example, impact normal cell detection requirements on other carrier or UE is not allowed to perform better than performance requirements in order to reduce unnecessary reporting , for example, allowing that a moving UE does not report small cells and thus avoid handovers, ping pongs and the like.

The new GAP_PERIOD or performance requirements may be defined as time, for example, 4800 milliseconds or as a multiplier for normal gap/requirements.

It should be noted that there may need to be two considerations if an embodiment shows no new gap configuration approach is taken. While if a new gap pattern approach is taken then a technique of introducing a new gap configuration every T background, such as, every 4800 milliseconds may be used. To reflect impact to measurement performance one could capture this to reflect reduced measurement time in TInter in table 8.1.2.1-1, for example, with 4800 milliseconds gap period TInter would be 0,5 milliseconds but this may affect all frequencies to be measured. In both cases there is a need to limit the UE performance.

For the technique where no new gap configuration, new performance requirements for reduced performance carrier could be implemented, for example, in the following way and requirements for normal frequencies may be kept as they are:

8.1.2.3.1.1 E-UTRAN FDD - FDD inter frequency measurements when no DRX is used.

When measurement gaps are scheduled, or the UE supports capability of conducting such measurements without gaps, the UE may be able to identify a new FDD inter-frequency within $T_{Identify\_Inter}$ according to the following expression:

$$T_{Identify\_Inter\_reduced} = T_{Basic\_Identify\_Inter} \cdot \frac{480}{T_{Inter1\_reduced}} \cdot N_{freq} \quad ms \ .$$

In order to reflect reduced measurements that are used for reduced performance carrier the definition of TInter1_reduced may be changed, for example, in following way or alternatively just captured directly from the equation:

| 2 | 6 | 4800 or configurable GAP_PERIOD | 0,5 or 480/GAP_PERIOD*5 | Inter-Frequency E-UTRAN FDD and TDD, UTRAN FDD, GERAN, LCR TDD, HRPD, CDMA20001x |
|---|---|---|---|---|

In the embodiment of introducing a new gap configuration every T background, such as, every 4800 milliseconds may be used, less opportunities for measurements may be indicated, for example, in the definition of TInter1 (assuming 6 milliseconds gaps every GAP_PERIOD), that is, it takes longer to identify/measure inter-frequency cells due to longer measurement gap period:

| Gap Pattern Id | MeasurementGap Length (MGL, ms) | Measurement Gap Repetition Period (MGRP, ms) | Minimum available time for inter-frequency and inter-RAT measurements during 480ms period (Tinter1, ms) | Measurement Purpose |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA20001x |
| 2 | 6 | 4800 or configurable GAP_PERIOD | 0,5 or 480/GAP_PERIOD*5 | Inter-Frequency E-UTRAN FDD and TDD, UTRAN FDD, GERAN, LCR TDD, HRPD, CDMA20001x |

8.1.2.3.1.1 E-UTRAN FDD - FDD inter frequency measurements when no DRX is used.

In some embodiments, when measurement gaps are scheduled, or the UE supports capability of conducting such measurements without gaps, the UE may be able to identify a new FDD inter-frequency within $T_{Identify\_Inter}$ according to the following expression:

$$T_{Identify\_Inter\_new\_common} = T_{Basic\_Identify\_Inter} \cdot \frac{480}{T_{Inter1}} \cdot N_{freq} \quad ms \ .$$

The above equation may provide a similar performance for "reduced" and normal performance carriers. Another option may be to define a new gap configuration so that reduced performance carrier has a poorer performance than normal requirement.

In certain embodiments, in order to impact existing performance requirement for normal carriers and to introduce new performance, the following technique may be used: 8.1.2.3.1.1 E-UTRAN FDD - FDD inter frequency measurements when no DRX is used.

When measurement gaps are scheduled, or the UE supports capability of conducting such measurements without gaps, the UE may be able to identify a new FDD inter-frequency within $T_{Identify\_Inter}$ according to the following expression:

(without new gap configuration)

$$T_{Identify\_Inter} = T_{Basic\_Identify\_Inter} \cdot \frac{480}{T_{Inter1} * (1 - ((480 / GAP\_PERIOD) * 5) / T_{Inter1})} \cdot N_{freq} \quad ms$$

$$T_{Identify\_Inter\_reduced} = T_{Basic\_Identify\_Inter} \cdot \frac{480}{T_{Inter1} * ((480 / GAP\_PERIOD) * 5) / T_{Inter1})} \cdot N_{freq} \quad ms$$

The above equations may consider UE to use x % of the measurement opportunities, for example, with GAP_PERIOD=4800 milliseconds and gap period of 80 milliseconds (=Tinter1=30) resulting in the following results: Tidentify_Inter = 60/59 times normal 80 milliseconds requirement; and Tidentify_inter_reduced = 60/1 (60 times) normal 80 milliseconds requirement.

Further, in order to capture that UE is not allowed to perform better, it may be indicated that for reduced performance carrier UE is not allowed to perform better than the limit. Thus, ensuring that the UE does not detect a cell too fast, that is, it could be ensured by stating that the UE may measure the cell using at least two measurements taken at least half a GAP_PERIOD apart.

It should be noted that in the above example embodiments, only inter-frequency performance requirements are affected but naturally this can be expanded to include, for example, inter-RAT measurements.

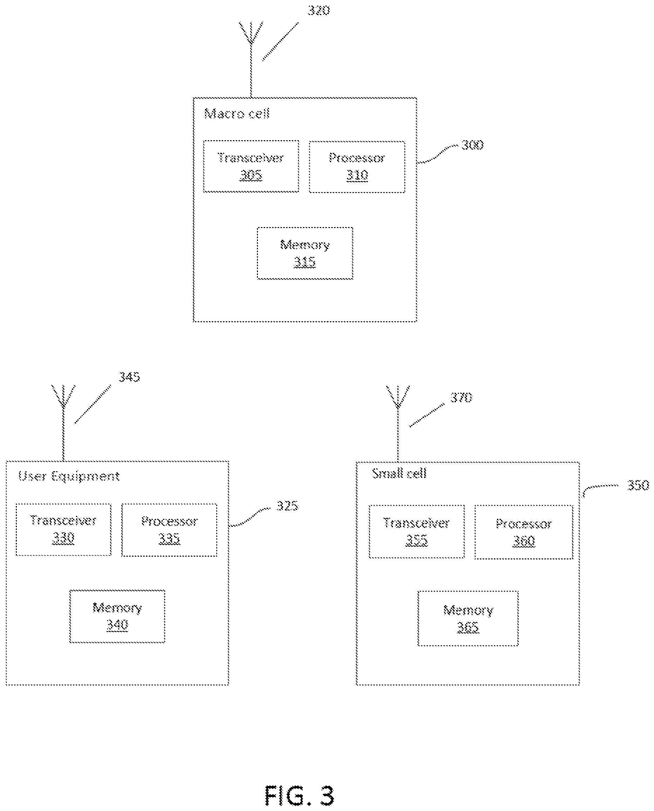

Figure 3 illustrates a block diagram of a system according to certain embodiments. In one embodiment, a system may comprise several devices, such as, for example, macro cell 300, user equipment 325, and a small cell 350. Macro cell 300 may correspond to macro cell 110, shown in Figure 1. The system may comprise more than macro cell, user equipment, or small cell, although only one of each is shown for the purposes of illustration. Macro cell 300 may be an eNodeB. User equipment 325 may be any Internet-connected device, such as a tablet computer, mobile phone, smart phone, laptop computer, personal digital assistant (PDA) or the like. Small cell 350 may be a picocell, femtocell, or the like.

Each of the devices in the system may comprise at least one processor, respectively indicated as 310, 335, and 360. At least one memory may be provided in each device, and indicated as 315, 340, and 365, respectively. The memory may comprise computer program instructions or computer code contained therein. One or more transceiver 305, 330, and 355 may be provided, and each device may also comprise an antenna, respectively illustrated as 320, 345, and 370. Although only one antenna each is shown, many antennas and multiple antenna elements may be provided to each of the devices. Other configurations of these devices, for example, may be provided. For example, macro cell 300, user equipment 325, and small cell 350 may be additionally or solely configured for wired communication and in such a case antennas 320, 345, and 370 may illustrate any form of communication hardware, without being limited to merely an antenna.

Transceivers 305, 330, and 355 may each, independently, be a transmitter, a receiver, or both a transmitter and a receiver, or a unit or device that may be configured both for transmission and reception.

Processors 310, 335, and 360 may be embodied by any computational or data processing device, such as a central processing unit (CPU), application specific integrated circuit (ASIC), or comparable device. The processors may be implemented as a single controller, or a plurality of controllers or processors.

Memories 315, 340, and 365 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and may be processed by the processors may be any suitable form of computer program code, for example, a compiled or interpreted computer program written in any suitable programming language.

The memory and the computer program instructions may be configured, with the processor for the particular device, to cause a hardware apparatus such as macro cell 300, user equipment 325, and small cell 350, to perform any of the processes described above. Therefore, in certain embodiments, a non-transitory computer-readable medium may be encoded with computer instructions that, when executed in hardware, may perform a process, such as one of the processes described herein. Alternatively, certain embodiments of the invention may be performed entirely in hardware.

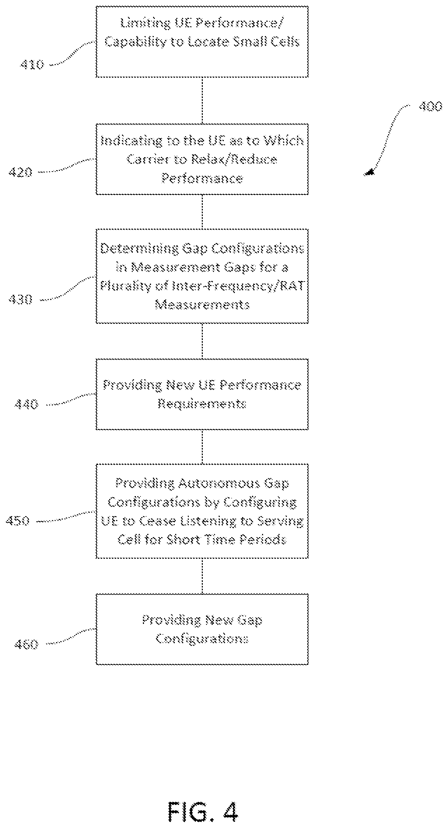

Figure 4 illustrates a method 400 according to certain embodiments. In Figure 4 at 410, the method may include limiting UE performance/capability to find small cells by configuring the UE to relax/reduce performance.

At 420, the method may also include indicating to the UE as to which carrier to relax/reduce the UE performance.

At 430, the method may further include determining gap configurations in measurement gaps for a plurality of inter-frequency/RAT measurements.

At 440, the method may also include providing new UE performance requirements. The new UE performance requirements may act similarly as in step 410 by limiting UE capability to find small cells.

At 450, the method may include providing autonomous gap configurations by configuring UE to cease/stop listening to serving cell for short time periods.

At 460, the method may further include providing new gap configurations. The new gap configurations may also limit UE capability to find small cells.

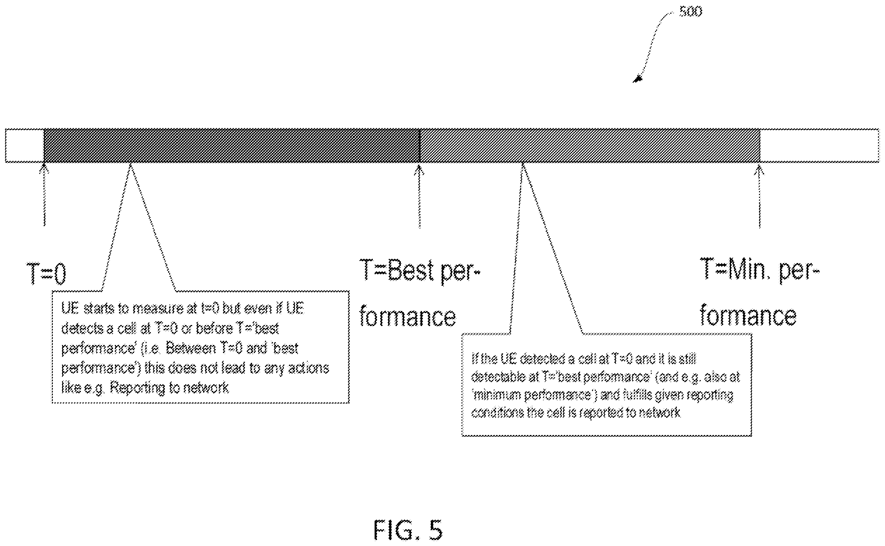

Figure 5 illustrates a UE performance graph 500 according to certain embodiments. Figure 5 shows a UE "minimum" performance (as specified in 36.133) and the UE "best" performance according to certain embodiments.

For example, the minimum performance indicates what may be the minimum performance that can be expected by the UE, although the UE may perform better.

In some embodiments, the "best" performance may be determined by introducing some (predetermined) limit on the best UE performance and thereby ensuring that the UE will not perform better than the limit. This is beneficial for reducing certain procedures related, for example, to small cell detection.

As shown in Figure 5, a detected cell will not be reported to the network too early, that is, when the detected cell is between T=0 and T=Best performance. The earliest the detected cell will be reported to the network may be between T=Best and T=Min. performance. In other words, the UE may start to measure at T=0 but even if the UE detects a cell at T=0 or before T=Best performance, that is, between T=0 and T=Best performance, for the UE this does not lead to any actions, for example, reporting to the network.

Furthermore, if the UE detects a cell at T=0 and the cell is still detectable at T=Best performance (and, for example, the cell is still detectable also at T=Min. performance) and fulfills given reporting conditions, the cell is reported to the network.

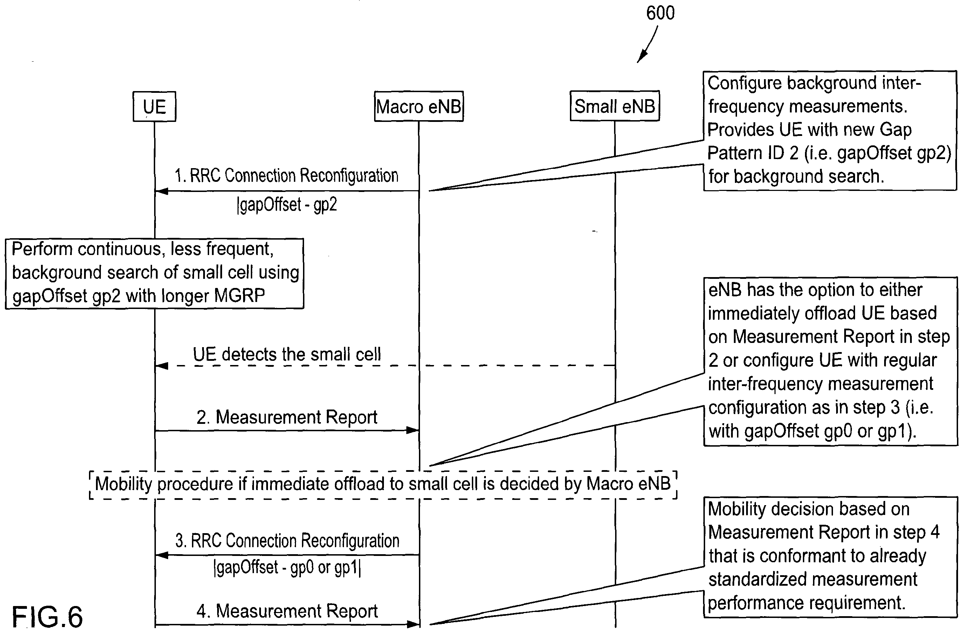

Figure 6 illustrates a signaling flow diagram 600 for network controlled background inter-frequency measurement for small cell discovery and reporting according to certain embodiments. In Figure 6 message (1) which may be sent from Macro eNB may contain an indicating rule to the UE. This indicating rule may be that relaxed requirements can be applied for the carrier.

In some embodiments, a relaxed requirement may be for the UE to apply 'UE steals' and therefore, take one or more gaps from an already configured existing gap pattern, resulting in some new minimum performance and best performance being be applied.

In other embodiments, a relaxed requirement may be for the UE to apply an autonomous gap and which can interrupt the data flow (Max amounts per time window).

In another embodiment, a relaxed requirement may be for the UE to apply 'UE steals' and therefore, take one or more gaps from already configured existing gap pattern, resulting in some new minimum performance and best performance being be applied. Also, there may be lowered performance for other carriers due to less gaps because of 'stealing' action.

In yet another embodiment, a relaxed requirement may be providing a new gap configuration to the UE.

As shown in Figure 6, the indication may be signaling from the network to the UE. Furthermore, the UE performance would be defined in 36.133.

The various example embodiments described above allow continued inter-frequency measurements to be configured (less signaling) and allow for UE power saving opportunities. These example embodiments ensure small cell detection minimum requirements and ensure best performance (through minimum measurement interval time) which can allow network optimization. The example embodiments further allow networks to rely on slow or limited UE small cell detection.

In certain embodiments a method of background search of small cells is described. For example, the method may include limiting UE performance/capability to find small cells by relaxing UE performance. The method may include UE receiving a signal from a base station indicating to the UE as to which carrier to relax performance. The method may further include determining gap configurations in measurement gaps for a plurality of inter-frequency/RAT measurements. The method may also include providing new UE performance requirements, providing autonomous gap configurations by configuring UE to cease listening to serving cell for short time periods. The method may still further include providing new gap configurations to the UE. The method may further include a base station sending a signal to trigger the UE as to which carrier to relax performance.

In other embodiments an apparatus of background search of small cells is described. For example, the apparatus may include at least one processor and at least one memory including computer program code. The at least one memory and the computer program code may be configured to, with the at least one processor, cause the apparatus at least to limit UE performance/capability to find small cells by relaxing UE performance. The computer program code may be configured to, with the at least one processor, cause the apparatus at least to receive a signal from a base station indicating to the UE as to which carrier to relax performance. The computer program code may be configured to, with the at least one processor, cause the apparatus at least to send a signal to trigger the UE as to which carrier to relax performance. The computer program code may be configured to, with the at least one processor, cause the apparatus at least to determine gap configurations in measurement gaps for a plurality of inter-frequency/RAT measurements. The computer program code may be configured to, with the at least one processor, cause the apparatus at least to provide new UE performance requirements. The computer program code may be configured to, with the at least one processor, cause the apparatus at least to provide autonomous gap configurations by configuring UE to cease listening to serving cell for short time periods, and provide new gap configurations.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent.

List of abbreviations and definitions

| | |
|---|---|
| UE | User Equipment |
| HO | Handover |
| TP | Throughput |
| RSRP | Reference Signal Received Power |
| RSRQ | Reference Signal Received Quality |
| RA | Random Access |
| RACH | Random Access Channel |
| E-UTRAN | Evolved Universal Terrestrial Radio Access Network |
| PUCCH | Packet Uplink Control Channel |
| SR | Scheduling Request |

**Claims**

1. A method performed by a user equipment (325), comprising:

   determining, when receiving an indication from a base station, that relaxed measurement performance, relative to an existing measurement performance, is permitted on a given carrier, the given carrier being an inter-frequency or an inter-RAT carrier; and
   stealing a plurality of measurement occasions to perform a background search of small cells on the given carrier based on the determined permission for relaxed measurement performance, wherein the stealing is triggered by the received indication and comprises taking the plurality of measurement occasions from an already existing gap pattern that is currently configured for measuring an other carrier with the existing measurement performance.

2. The method of claim 1, further comprising:
   maintaining normal performance on the other carrier with the existing measurement performance.

3. The method of claim 1 or claim 2, wherein the stealing of measurement occasions is configured to occur with a predetermined periodicity.

4. The method of any of claims 1-3, wherein the user equipment (325) only uses measurement occasions that the user equipment needs in order to fulfil requirements.

5. A method performed by a base station, comprising:

   determining that relaxed measurement performance, relative to an existing measurement performance, is permitted on a given carrier for a user equipment, the given carrier being an inter-frequency or an inter-RAT carrier; and
   signaling the user equipment an indication that relaxed measurement performance is permitted on the given carrier, wherein the indication is configured to trigger the user equipment (325) to steal a plurality of measurement occasions from an already existing gap pattern that is currently configured for measuring an other carrier with the existing measurement performance to perform a background search of small cells based on the determined permission for relaxed measurement performance.

6. A user equipment apparatus (325), comprising:

   means for determining, when receiving an indication from a base station, that relaxed measurement, relative to an existing measurement performance, is permitted on a given carrier, the given carrier being an inter-frequency or inter-RAT carrier; and
   means for stealing, a plurality of measurement occasions to perform a background search of small cells on the given carrier based on the determined permission for relaxed measurement performance, wherein the means for stealing comprises means for taking the plurality of measurement occasions from an already existing gap pattern that is currently configured for measuring an other carrier with the existing measurement performance, wherein the stealing is triggered by the received indication.

7. The apparatus of claim 6, further comprising:
   means for maintaining normal performance on the other carrier with the existing measurement performance.

8. The apparatus of claim 6 or claim 7, wherein the stealing of measurement occasions is configured to occur with a predetermined periodicity.

9. The apparatus of any of claims 6-8, wherein the user equipment (325) only uses measurement occasions that the user equipment needs in order to fulfil requirements.

10. The apparatus of any of claims 6-9, wherein the means for determining that relaxed measurement performance is permitted on a carrier comprises means for receiving a signal from a base station that relaxed measurement performance is permitted on the carrier.

11. A base station apparatus, comprising:

   means for determining that relaxed measurement performance, relative to an existing measurement performance, is permitted on a given carrier for a user equipment, the given carrier being an inter-frequency or inter-RAT carrier; and
   means for signaling the user equipment (325) an indication that relaxed measurement performance is permitted on the given carrier, wherein the indication is configured to trigger the user equipment (325) to steal a plurality of measurement occasions from an already existing gap pattern that is currently configured for measuring an other carrier with the existing measurement performance to perform a background search of small cells on the given carrier based on the determined permission for relaxed measurement performance.

12. A computer program comprising instructions that, when executed in hardware, perform a process, the process comprising the method according to any of claims 1-5.

**Patentansprüche**

1. Verfahren, das von einem Benutzergerät (325) durchgeführt wird und umfasst:

    Bestimmen bei Empfang einer Angabe von einer Basisstation, dass relaxierte Messperformance in Bezug auf eine bestehende Messperformance auf einem gegebenen Träger erlaubt ist, wobei der gegebene Träger ein Inter-Frequenz- oder ein Inter-RAT-Träger ist,
    Stehlen einer Mehrzahl von Messgelegenheiten, um eine Hintergrundsuche von kleinen Zellen auf dem gegebenen Träger basierend auf der bestimmten Erlaubnis für relaxierte Messperformance durchzuführen, wobei das Stehlen durch die empfangene Angabe ausgelöst wird und ein Entnehmen der Mehrzahl von Messgelegenheiten aus einem bereits bestehenden Lückenmuster umfasst, das gegenwärtig zum Messen eines anderen Trägers mit der bestehenden Messperformance konfiguriert ist.

2. Verfahren nach Anspruch 1, ferner umfassend:
    Aufrechterhalten einer normalen Performance auf dem anderen Träger mit der bestehenden Messperformance.

3. Verfahren nach Anspruch 1 oder 2, wobei das Stehlen von Messgelegenheiten so konfiguriert ist, dass es mit einer vorbestimmten Periodizität erfolgt.

4. Verfahren nach einem der Ansprüche 1 bis 3, wobei das Benutzergerät (325) nur Messgelegenheiten verwendet, die das Benutzergerät zum Erfüllen von Anforderungen benötigt.

5. Verfahren, das von einer Basisstation durchgeführt wird und umfasst:

    Bestimmen, dass relaxierte Messperformance in Bezug auf eine bestehende Messperformance auf einem gegebenen Träger für ein Benutzergerät erlaubt ist, wobei der gegebene Träger ein Inter-Frequenz- oder ein Inter-RAT-Träger ist; und
    Signalisieren einer Angabe, dass relaxierte Messperformance auf dem gegebenen Träger erlaubt ist, an das Benutzergerät, wobei die Angabe so konfiguriert ist, dass sie das Benutzergerät (325) auslöst, um eine Mehrzahl von Messgelegenheiten aus einem bereits bestehenden Lückenmuster, das gegenwärtig zum Messen eines anderen Trägers mit einer bestehenden Messperformance konfiguriert ist, zum Durchführen einer Hintergrundsuche von kleinen Zellen basierend auf der bestimmten Erlaubnis für relaxierte Messperformance zu stehlen.

6. Benutzergerätevorrichtung (325), umfassend:

    Mittel zum Bestimmen bei Empfang einer Angabe von einer Basisstation, dass relaxierte Messung in Bezug auf eine bestehende Messperformance auf einem gegebenen Träger erlaubt ist, wobei der gegebene Träger ein Inter-Frequenz- oder Inter-RAT-Träger ist,
    Mittel zum Stehlen einer Mehrzahl von Messgelegenheiten, um eine Hintergrundsuche von kleinen Zellen auf dem gegebenen Träger basierend auf der bestimmten Erlaubnis für relaxierte Messperformance durchzuführen, wobei das Mittel zum Stehlen Mittel zum Entnehmen der Mehrzahl von Messgelegenheiten aus einem bereits bestehenden Lückenmuster umfasst, das gegenwärtig zum Messen eines anderen Trägers mit der bestehenden Messperformance konfiguriert ist, wobei das Stehlen durch die empfangene Angabe ausgelöst wird.

7. Vorrichtung nach Anspruch 6, ferner umfassend:
    Mittel zum Aufrechterhalten einer normalen Performance auf dem anderen Träger mit der bestehenden Messperformance.

8. Vorrichtung nach Anspruch 6 oder 7, wobei das Stehlen von Messgelegenheiten so konfiguriert ist, dass es mit einer vorbestimmten Periodizität erfolgt.

9. Vorrichtung nach einem der Ansprüche 6 bis 8, wobei das Benutzergerät (325) nur Messgelegenheiten verwendet, die das Benutzergerät zum Erfüllen von Anforderungen benötigt.

10. Vorrichtung nach einem der Ansprüche 6 bis 9, wobei das Mittel zum Bestimmen, dass relaxierte Messperformance auf einem Träger erlaubt ist, Mittel zum Empfangen eines Signals von einer Basisstation umfasst, dass relaxierte Messperformance auf dem Träger erlaubt ist.

**11.** Basisstationsvorrichtung, umfassend:

Mittel zum Bestimmen, dass relaxierte Messperformance in Bezug auf eine bestehende Messperformance auf einem gegebenen Träger für ein Benutzergerät erlaubt ist, wobei der gegebene Träger ein Inter-Frequenz- oder Inter-RAT-Träger ist; und
Mittel zum Signalisieren einer Angabe, dass relaxierte Messperformance auf dem gegebenen Träger erlaubt ist, an das Benutzergerät (325), wobei die Angabe so konfiguriert ist, dass sie das Benutzergerät (325) auslöst, um eine Mehrzahl von Messgelegenheiten aus einem bereits bestehenden Lückenmuster, das gegenwärtig zum Messen eines anderen Trägers mit einer bestehenden Messperformance konfiguriert ist, zum Durchführen einer Hintergrundsuche von kleinen Zellen auf dem gegebenen Träger basierend auf der bestimmten Erlaubnis für relaxierte Messperformance zu stehlen.

**12.** Computerprogramm, umfassend Anweisungen, die bei Ausführung in Hardware einen Prozess durchführen, wobei der Prozessor das Verfahren nach einem der Ansprüche 1 bis 5 umfasst.

**Revendications**

**1.** Procédé effectué par un équipement utilisateur (325), comprenant :

la détermination, lors de la réception d'une indication d'une station de base, qu'une performance de mesure assouplie, par rapport à une performance de mesure existante, est autorisée sur une porteuse donnée, la porteuse donnée étant une porteuse inter-fréquence ou inter-RAT ; et
la subtilisation d'une pluralité d'occasions de mesure pour effectuer une recherche en arrière-plan de petites cellules sur la porteuse donnée sur la base de l'autorisation déterminée d'une performance de mesure assouplie, la subtilisation étant déclenchée par l'indication reçue et comprend le fait de saisir la pluralité d'occasions de mesure à partir d'un motif d'interruption déjà existant qui est actuellement configuré pour mesurer une autre porteuse avec la performance de mesure existante.

**2.** Procédé selon la revendication 1, comprenant en outre :
le maintien d'une performance normale sur l'autre porteuse avec la performance de mesure existante.

**3.** Procédé selon la revendication 1 ou 2, dans lequel la subtilisation d'occasions de mesure est configurée pour survenir avec une périodicité prédéterminée.

**4.** Procédé selon l'une quelconque des revendications 1 à 3, dans lequel l'équipement utilisateur (325) n'utilise que les occasions de mesure que l'équipement utilisateur nécessite pour satisfaire les besoins.

**5.** Procédé effectué par une station de base, comprenant :

la détermination qu'une performance de mesure assouplie, par rapport à une performance de mesure existante, est autorisée sur une porteuse donnée pour un équipement utilisateur, la porteuse donnée étant une porteuse inter-fréquence ou inter-RAT ; et
la signalisation à l'équipement utilisateur d'une indication qu'une performance de mesure assouplie est autorisée sur la porteuse donnée, l'indication étant configurée pour déclencher la subtilisation par l'équipement utilisateur (325) d'une pluralité d'occasions de mesure d'un motif d'interruption déjà existant qui est actuellement configuré pour mesurer une autre porteuse avec la performance de mesure existante afin d'effectuer une recherche en arrière-plan de petites cellules sur la base de l'autorisation déterminée d'une performance de mesure assouplie.

**6.** Appareil d'équipement utilisateur (325), comprenant :

des moyens pour déterminer, lors de la réception d'une indication d'une station de base, qu'une performance de mesure assouplie, par rapport à une performance de mesure existante, est autorisée sur une porteuse donnée, la porteuse donnée étant une porteuse inter-fréquence ou inter-RAT ; et
des moyens pour subtiliser une pluralité d'occasions de mesure pour effectuer une recherche en arrière-plan de petites cellules sur la porteuse donnée sur la base de l'autorisation déterminée d'une performance de mesure assouplie, les moyens de subtilisation comprenant des moyens pour saisir la pluralité d'occasions de mesure à partir d'un motif d'interruption déjà existant qui est actuellement configuré pour mesurer une autre porteuse avec la performance de mesure existante, la subtilisation étant déclenchée par l'indication reçue.

7. Appareil selon la revendication 6, comprenant en outre :
des moyens pour maintenir une performance normale sur l'autre porteuse avec la performance de mesure existante.

8. Appareil selon la revendication 6 ou 7, dans lequel la subtilisation d'occasions de mesure est configurée pour survenir avec une périodicité prédéterminée.

9. Appareil selon l'une quelconque des revendications 6 à 8, dans lequel l'équipement utilisateur (325) n'utilise que les occasions de mesure que l'équipement utilisateur nécessite pour satisfaire les besoins.

10. Appareil selon l'une quelconque des revendications 6 à 9, dans lequel les moyens pour déterminer qu'une performance de mesure assouplie est autorisée sur une porteuse comprennent des moyens pour recevoir un signal d'une station de base qu'une performance de mesure assouplie est autorisée sur la porteuse.

11. Appareil de station de base, comprenant :

des moyens pour déterminer qu'une performance de mesure assouplie, par rapport à une performance de mesure existante, est autorisée sur une porteuse donnée pour un équipement utilisateur, la porteuse donnée étant une porteuse inter-fréquence ou inter-RAT ; et
des moyens pour signaler à l'équipement utilisateur (325) une indication qu'une performance de mesure assouplie est autorisée sur la porteuse donnée, l'indication étant configurée pour déclencher la subtilisation par l'équipement utilisateur (325) d'une pluralité d'occasions d'un motif d'interruption déjà existant qui est actuellement configuré pour mesurer une autre porteuse avec la performance de mesure existante pour effectuer une recherche en arrière de petites cellules sur la porteuse donnée sur la base de l'autorisation déterminée d'une performance de mesure assouplie.

12. Programme informatique, comprenant des instructions qui, lorsqu'elles sont exécutées sur un matériel, effectuent un processus, le processus comprenant le procédé selon l'une quelconque des revendications 1 à 5.

FIG.1

Traffic' refers to aggregated traffic in mobile access networks. DVB-H and Mobile WiMax
or WiFi traffic have not been included. M2M traffic not included.

FIG.2

320

Macro cell

| Transceiver | Processor |
| 305 | 310 |

300

Memory
315

345

User Equipment

| Transceiver | Processor |
| 330 | 335 |

325

Memory
340

370

Small cell

| Transceiver | Processor |
| 355 | 360 |

350

Memory
365

FIG. 3

410 — Limiting UE Performance/ Capability to Locate Small Cells

400

420 — Indicating to the UE as to Which Carrier to Relax/Reduce Performance

430 — Determining Gap Configurations in Measurement Gaps for a Plurality of Inter-Frequency/RAT Measurements

440 — Providing New UE Performance Requirements

450 — Providing Autonomous Gap Configurations by Configuring UE to Cease Listening to Serving Cell for Short Time Periods

460 — Providing New Gap Configurations

FIG. 4

*500*

T=0

UE starts to measure at t=0 but even if UE detects a cell at T=0 or before T='best performance' (i.e. Between T=0 and 'best performance') this does not lead to any actions like e.g. Reporting to network

T=Best performance

If the UE detected a cell at T=0 and it is still detectable at T='best performance' (and e.g. also at 'minimum performance') and fulfills given reporting conditions the cell is reported to network

T=Min. performance

FIG. 5

600

| UE | | Macro eNB | | Small eNB |

Configure background inter-frequency measurements. Provides UE with new Gap Pattern ID 2 (i.e. gapOffset gp2) for background search.

1. RRC Connection Reconfiguration

|gapOffset - gp2|

Perform continuous, less frequent, background search of small cell using gapOffset gp2 with longer MGRP

UE detects the small cell

eNB has the option to either immediately offload UE based on Measurement Report in step 2 or configure UE with regular inter-frequency measurement configuration as in step 3 (i.e. with gapOffset gp0 or gp1).

2. Measurement Report

Mobility procedure if immediate offload to small cell is decided by Macro eNB

Mobility decision based on Measurement Report in step 4 that is conformant to already standardized measurement performance requirement.

3. RRC Connection Reconfiguration

|gapOffset - gp0 or gp1|

4. Measurement Report

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013025160 A1


**Non-patent literature cited in the description**

- Mobility Enhancements in Heterogeneous Networks. *third generation partnership project (3GPP) technical report (TR) 36.839*
- Background search for small cell detection. *3GPP Draft Report R2-123102*
- Efficient small cell detection background search. *3GPP Report Drat R121623*
- Background inter-frequency measurement for small cell discovery. *3GPP Draft Report R2-130451*
- Enhancements for small cell detection. *3GPP Draft Report R2-120523*
- 3GPP TR 36.133